# EUROPÄISCHE PATENTANMELDUNG

(11) **EP 3 403 899 A1**
(43) Veröffentlichungstag der Anmeldung: **21.11.2018**
(21) Anmeldenummer: 17171521.2
(22) Anmeldetag: 17.05.2017
(51) Int. Cl.: B61L 25/02, B05B 9/06, E01H 11/00

(54) **UNKRAUTBEKÄMPFUNG BEI HOHER GESCHWINDIGKEIT**

(71) Anmelder: Bayer Aktiengesellschaft, 51373 Leverkusen (DE)
(72) Erfinder: BAßFELD, Hinnerk, 49536 Lienen (DE)
(74) Vertreter: BIP Patents

(57) **Zusammenfassung**

Die vorliegende Erfindung befasst sich mit dem technischen Gebiet der Unkrautbekämpfung mittels eines sich bewegenden Schienenfahrzeugs. Gegenstand der Erfindung sind eine Vorrichtung und ein Verfahren zur Erhöhung der Bewegungsgeschwindigkeit des Schienenfahrzeugs während der Durchführung von Maßnahmen zur Bekämpfung von Unkraut auf Gleisanlagen.

## Beschreibung

Die vorliegende Erfindung befasst sich mit dem technischen Gebiet der Unkrautbekämpfung mittels eines sich bewegenden Schienenfahrzeugs. Gegenstand der Erfindung sind eine Vorrichtung und ein Verfahren zur Erhöhung der Bewegungsgeschwindigkeit des Schienenfahrzeugs während der Durchführung von Maßnahmen zur Bekämpfung von Unkraut auf Gleisanlagen.

Die Bekämpfung von Pflanzen auf Gleisanlagen ist aus Sicherheitsgründen unbedingt erforderlich. Insbesondere das Schotterbett muss von Pflanzenbewuchs befreit und/oder freigehalten werden. Das Schotterbett ist üblicherweise flexibel und hilft sowohl statische als auch dynamische Belastungen gleichmäßig auf den Unterbau zu übertragen. Die unzähligen Hohlräume zwischen den einzelnen Steinen federn das enorme Gewicht von fahrenden Zügen und die Stöße wie ein Puffer ab. Pflanzen sowie der durch sie festgehaltene Humus können die Zwischenräume mit der Zeit verstopfen, was die Sicherheit der Züge erheblich gefährden kann. Aus Sicherheitsgründen muss deshalb Bewuchs aller Art von den Gleisanlagen ferngehalten werden.

Üblicherweise wird Pflanzenwachstum auf Gleisanlagen durch das Ausbringen von Herbiziden verhindert. So genannte Spritzzüge sind Spezialzüge zur Streckenpflege von Schienenbahnen. Sie dienen dem Ausbringen von Herbiziden, damit das Schotterbett nicht verkrautet.

Die Menge an ausgebrachten Herbiziden sollte sowohl aus Umweltschutzgründen als auch aus Kostengründen möglichst gering gehalten werden. Kamera-Systeme mit einer angeschlossenen Bildanalyse können eingesetzt werden, um Pflanzen im Gleisbett zu erkennen und gezielt zu bekämpfen. EP1521885B1 offenbart beispielsweise eine Vorrichtung zur Unkrautbekämpfung für ein Schienenfahrzeug, welche eine Unkraut erkennende Kamera umfasst, die mit eine Unkraut erkennenden Computer verbunden ist. Die beschriebene Vorrichtung kann eingesetzt werden, um ausschließlich diejenigen Streckenabschnitte, bei denen ein Unkrautbewuchs mittels Kamera und Computer festgestellt worden ist, mit Herbizid zu behandeln. Streckenabschnitte, die frei von Unkraut sind, müssen nicht behandelt werden.

Üblicherweise weisen die Komponenten, die zur Bekämpfung von Unkräutern in einem Spritzzug eingesetzt werden, eine gewisse Trägheit auf. Das Kamera-System mit angeschlossener Bildanalytik benötigt eine gewisse Zeit, um die während der Fahrt aufgenommenen Bilder zu analysieren. Weitere Zeit wird benötigt, um Pumpen und Ventile zum Ausbringen von Herbizid anzusteuern. Ferner muss eine Mindestmenge an Herbizid pro Fläche ausgebracht werden, um die gewünschte Wirkung zu erzielen; je schneller der Zug fährt, desto schneller muss diese Menge bereitgestellt und möglichst genau appliziert werden. Eine hohe Geschwindigkeit des Zugs kann dazu führen, dass ausgebrachte Herbizidmengen verwirbelt werden und nicht dort hingelangen, wo sie hingelangen sollen.

All dies führt dazu, dass ein Spritzzug üblicherweise mit einer geringen Geschwindigkeit von etwa 20 km/h betrieben wird. In der Zeit, in der sich ein Spritzzug auf einem Streckenabschnitt befindet, kann sich kein anderer Zug mit einer höheren Geschwindigkeit dort bewegen. Ein langsam fahrender Spritzzug führt daher zu einer gewissen Blockierung von Streckenabschnitten.

Ausgehend vom beschriebenen Stand der Technik bestand die objektive technische Aufgabe darin, die Zeit für die Bekämpfung von Unkräutern auf Gleisanlagen zu reduzieren.

Erfindungsgemäß wird diese Aufgabe durch die Gegenstände der unabhängigen Ansprüche 1 und 7 gelöst. Bevorzugte Ausführungsformen finden sich in den abhängigen Ansprüchen sowie in der vorliegenden Beschreibung.

Ein erster Gegenstand der vorliegenden Erfindung ist eine Vorrichtung zur Unkrautbekämpfung für ein Schienenfahrzeug, umfassend
- Anzeigemittel zum Anzeigen eines oder mehrerer Orte entlang einer Strecke, an dem/den Maßnahmen zur Unkrautbekämpfung durchgeführt werden sollen, und
- Bekämpfungsmittel zur Unkrautbekämpfung an dem angezeigten Ort / den angezeigten Orten
dadurch gekennzeichnet, dass die Anzeigemittel und/oder die Bekämpfungsmittel so hergerichtet sind, dass sie während der Fahrt des Schienenfahrzeugs eine Bewegung ausführen, die der Bewegungsrichtung des fahrenden Schienenfahrzeugs entgegengerichtet ist.

Ein weiterer Gegenstand der vorliegenden Erfindung ist ein Verfahren umfassend die Schritte
- Bewegen eines Schienenfahrzeuges entlang einer Strecke in eine Bewegungsrichtung,
- Anzeigen mindestens eines Ortes, an dem eine Maßnahme zur Unkrautbekämpfung durchgeführt werden soll,
- Durchführung der Maßnahme zur Unkrautbekämpfung an dem mindestens einen Ort,
dadurch gekennzeichnet, dass Anzeigemittel zum Anzeigen des mindestens einen Ortes und/oder Bekämpfungsmittel zur Durchführung der Maßnahme zur Unkrautbekämpfung an dem mindestens einen Ort während des Bewegens des Schienenfahrzeugs eine Bewegung ausführen, die der Bewegungsrichtung des Schienenfahrzeugs entgegengesetzt ist, um die Relativgeschwindigkeit zwischen Anzeigemittel(n) und/oder Bewegungsmittel(n) und dem mindestens einen Ort zu reduzieren.

Die Erfindung wird nachstehend näher erläutert, ohne zwischen den Erfindungsgegenständen (Vorrichtung, Verfahren) zu unterscheiden. Die nachfolgenden Erläuterungen sollen vielmehr für alle Erfindungsgegenstände in analoger Weise gelten, unabhängig davon, in welchem Kontext (Vorrichtung, Verfahren) sie erfolgen.

Die Erfindung dient zur Bekämpfung von Unkraut unter Einsatz eines sich bewegenden Schienenfahrzeuges.

Unter dem Begriff "Unkraut" (Mehrzahl: Unkräuter) werden Pflanzen in Gleisanlagen verstanden, die dort z.B. aus dem Samenpotential des Bodens oder über Zuflug zur Entwicklung kommen. Der Begriff ist nicht auf Kräuter im eigentlichen Sinne beschränkt, sondern umfasst auch Gräser, Farne, Moose oder holzige Pflanzen.

Da das Unkraut ein Sicherheitsrisiko für die Schienenfahrzeuge und die darin befindlichen Menschen, Tiere und/oder Güter darstellt, soll es bekämpft werden.

Unter dem Begriff "Bekämpfung" werden alle Maßnahmen zur Verhinderung des Aufkommens und/oder der Ausbreitung sowie Maßnahmen zur Reduzierung von Unkräutern verstanden.

Unter dem Begriff "Schienenfahrzeug" wird jedes Fahrzeug verstanden, das sich durch Antriebsmittel auf Schienen entlang einer Strecke von einem Ort zu einem anderen Ort bewegen kann. Vorzugsweise handelt es sich bei dem Schienenfahrzeug um einen Zug (z.B. einen Spritzzug) oder einen Unimog. Vorzugsweise kann sich das Schienenfahrzeig mittels der Antriebsmittel mit einer Geschwindigkeit von mindestens 30 km/h, vorzugsweise mindestens 40 km/h, noch mehr bevorzugt mindestens 50 km/h bewegen.

Zur Bekämpfung von Unkraut verfügt das Schienenfahrzeug über Anzeigemittel und Bekämpfungsmittel. Die Anzeigemittel dienen dazu, mindestens einen Ort anzuzeigen, an dem eine Maßnahme zur Bekämpfung von Unkraut durchgeführt werden soll. Die Bekämpfungsmittel dienen dazu, eine Maßnahme zur Bekämpfung von Unkraut durchzuführen. Anzeigemittel und oder Bekämpfungsmittel sind an dem Schienenfahrzeug so angebracht, dass sie eine Bewegung in eine Richtung ausführen können, die der Bewegungsrichtung des Schienenfahrzeugs entgegengesetzt ist. Nachfolgend werden solche Bekämpfungsmittel und/oder Anzeigemittel auch als bewegliche Bekämpfungsmitte und/oder bewegliche Anzeigemittel bezeichnet.

Das sich in eine Richtung bewegende Schienenfahrzeug führt eine Reaktivbewegung gegenüber der ruhenden Gleisanlage und den darin befindlichen Pflanzen aus. Durch die Bewegung der beweglich ausgeführten Bekämpfungsmittel und/oder Anzeigemittel in die entgegengesetzte Richtung wird die Relativgeschwindigkeit der Bekämpfungsmittel und/oder Anzeigemittel gegenüber der ruhenden Gleisanlage bzw. den darin befindlichen Pflanzen reduziert. Bewegen sich die Bekämpfungsmittel und/oder Anzeigemittel mit der gleichen Geschwindigkeit wie das Schienenfahrzeug, wird 100% der Fahrtgeschwindigkeit kompensiert. Vorzugsweise liegt die Kompensation der Fahrtgeschwindigkeit im Bereich von 10% bis 90%, noch mehr bevorzugt im Bereich von 20% bis 80%.

In einer Ausführungsform fährt das Schienenfahrzeug in eine Richtung, während die Bekämpfungsmittel eine Bewegung in die entgegengesetzte Richtung ausführen und dabei eine Maßnahme zur Bekämpfung von Unkraut durchführen.

In einer weiteren Ausführungsform fährt das Schienenfahrzeug in eine Richtung, während die Anzeigemittel eine Bewegung in die entgegengesetzte Richtung ausführen und dabei Orte anzeigen, an denen eine Maßnahme zur Bekämpfung von Unkraut durchzuführen ist.

In einer weiteren Ausführungsform fährt das Schienenfahrzeug in eine Richtung, während die Anzeigemittel eine Bewegung in die entgegengesetzte Richtung ausführen und dabei Orte anzeigen, an denen eine Maßnahme zur Bekämpfung von Unkraut durchzuführen ist, und die Bekämpfungsmittel ebenfalls eine Bewegung in die entgegengesetzte Richtung ausführen und dabei eine Maßnahme zur Bekämpfung von Unkraut an den angezeigten Orten ausführen.

In einer Ausführungsform der vorliegenden Erfindung erfolgt die Unkrautbekämpfung durch Ausbringen eines oder mehrerer Herbizide. Dabei kann es sich um selektive Herbizide handeln, die gezielt bestimmte Pflanzen abtöten, oder um so genannte Totalherbizide handeln, die gegen sehr viele Pflanzen wirken. Auch eine Kombination von selektiven und Totalherbiziden ist denkbar. Die vorzugsweise beweglichen Bekämpfungsmittel sind vorzugsweise Sprühdüsen, die über zumindest partiell flexible Leitungen mit einem Behälter mit einer Herbizidformulierung verbunden sind.

In einer weiteren Ausführungsform der vorliegenden Erfindung erfolgt die Unkrautbekämpfung durch Abflämmen. Bei den vorzugsweise beweglich ausgeführten Bekämpfungsmitteln handelt es sich vorzugsweise um eine oder mehrere Düsen, aus denen ein brennbares Material austreten kann, das mittels einer Zündvorrichtung zum Brennen gebracht werden kann.

In einer weiteren Ausführungsform der vorliegenden Erfindung erfolgt die Unkrautbekämpfung durch Vereisen, beispielsweise durch Ausbringen von Flüssigstickstoff. Bei den vorzugsweise beweglich ausgeführten Bekämpfungsmitteln handelt es sich vorzugsweise um eine oder mehrere Düsen, aus denen Flüssigstickstoff ausgebracht werden kann.

In einer weiteren Ausführungsform der vorliegenden Erfindung erfolgt die Unkrautbekämpfung durch Einwirkung elektromagnetischer Strahlung, beispielsweise durch Röntgenstrahlung Ultraviolettstrahlung, Infrarotstrahlung, Mikrowellenstrahlung oder stark gebündelter sichtbarer Strahlung z.B. mittels Laserstrahlung. Bei den vorzugsweise beweglich ausgeführten Bekämpfungsmitteln handelt es sich vorzugsweise um Mittel zum Aussenden von Strahlung in Richtung von Pflanzen, die sich auf der Gleisanlage befinden. Bei diesen Mitteln kann es sich um Strahlungsquellen für elektromagnetische Strahlung handeln. Es ist aber auch denkbar, dass es sich um Mittel handelt, mit denen elektromagnetische Strahlung in eine definierte Richtung geleitet wird, wie beispielsweise um Spiegel, Linsen und/oder Prismen.

In einer weiteren Ausführungsform der vorliegenden Erfindung erfolgt die Unkrautbekämpfung durch die Anwendung von Strom. Bei den vorzugsweise beweglich ausgeführten Bekämpfungsmitteln handelt es sich vorzugsweise um Elektroden, durch die bei Kontakt mit einer Pflanze ein elektrischer Strom zum Fließen gebracht werden kann, der zumindest teilweise durch Teile der Pflanze fließt.

Denkbar ist auch eine Kombination von zwei oder mehreren der genannten Unkrautbekämpfungsmaßnahmen.

Die Maßnahmen zur Unkrautbekämpfung werden während der Fahrt eines Schienenfahrzeugs entlang einer Strecke vorgenommen.

Vorzugsweise erfolgt die Bekämpfung von Unkraut bei einer Geschwindigkeit von mindestens 30 km/h, vorzugsweise mindestens 40 km/h, noch mehr bevorzugt mindestens 50 km/h.

Es ist denkbar, dass eine Unkrautbekämpfungsmaßnahme eine gewisse Zeit in Anspruch nimmt. Es ist zum Beispiel denkbar, dass eine Mindestenergie in Form von elektrischer Energie oder thermischer Energie oder elektromagnetischer Energie in eine Pflanze eingebracht werden muss, um diese abzutöten. Es ist denkbar, dass zum Erreichen dieser Mindestenergie z.B. eine Mindestkontaktzeit zwischen der Pflanze und einer Elektrode eingehalten werden muss. Es ist auch denkbar, dass zum Erreichen der Mindestenergie die Pflanze z.B. einer Mindestdauer einer Strahlung ausgesetzt sein muss. Es ist auch denkbar, dass Ventile eine gewisse Zeit zum Öffnen benötigen und Herbizide eine gewisse Zeit benötigen, um aus einer Düse ausgetrieben zu werden.

Ferner ist es denkbar, dass die durch das fahrende Schienenfahrzeug resultierende hohe Relativgeschwindigkeit zwischen Bekämpfungsmittel und Unkraut einen negativen Einfluss auf die Bekämpfungsmaßnahme ausübt. Es ist zum Beispiel denkbar, dass der mit der Geschwindigkeit des Schienenfahrzeugs zunehmende Fahrtwind zu einer ungewünschten Verteilung des versprühten Herbizids führt.

Erfindungsgemäß wird daher die Relativgeschwindigkeit zwischen dem Bekämpfungsmittel und dem zu bekämpfenden Unkraut durch eine Bewegung der Bekämpfungsmittel entgegengesetzt zur Bewegungsrichtung des Schienenfahrzeugs reduziert.

Es ist zum Beispiel denkbar, dass die Bekämpfungsmittel beweglich an einer Schiene am Schienenfahrzeug gelagert sind. Während sich das Schienenfahrzeug in eine Richtung bewegt (z.B. nach "vorne"), können sich die an der Schiene gelagerten Bekämpfungsmittel an der Schiene zum Beispiel motorgetrieben in die entgegengesetzte Richtung (nach "hinten") bewegen und bei dieser Bewegung eine Maßnahme zur Unkrautbekämpfung ausüben.

Es ist denkbar, dass die Schiene in sich geschlossen ist und nach einer Wegstrecke, entlang der die Bekämpfungsmaßnahme ausgeführt wird, wieder zurück an den Anfang führt. Die Schiene könnte zum Beispiel in Form einer "langgestreckten Null" ausgeführt sein. Eine "langgestreckte Null" weist zwei parallele Geradenabschnitte auf, die über zwei vorzugsweise halbkreisförmige Bögen miteinander verbunden sind. Auf einem der Geradenabschnitte bewegen sich die Bekämpfungsmittel entgegengesetzt zur Bewegungsrichtung des Schienenfahrzeugs und führen dabei eine Bekämpfungsmaßnahme aus. Dann werden sie über den ersten Bogen auf den zweiten Geradenabschnitt geführt und bewegen sich auf dem zweiten Geradenabschnitt in die gleiche Richtung wie das Schienenfahrzeug. Vorzugsweise führen sie während dieser Bewegung in Fahrtrichtung keine Bekämpfungsmaßnahme aus. Dann gelangen sie auf den zweiten Bogen und werden durch den zweiten Bogen wieder auf den ersten Geradenabschnitt geführt.

Es können mehrere Bekämpfungsmittel an der in sich geschlossenen Schiene geführt werden, so dass sich immer mindestens ein Bekämpfungsmittel auf einem Geradenabschnitt befindet, auf dem sich das Bekämpfungsmittel entgegengesetzt zur Fahrtrichtung des Schienenfahrzeugs bewegt. Auf diese Weise ist stets mindestens ein Bekämpfungsmittel im Einsatz.

Es ist auch denkbar, die Bekämpfungsmittel an einem umlaufenden Träger befestigt sind, wie er beispielsweise bei Kettenfahrzeugen oder Rolltreppen bekannt ist.

Neben der lateralen Bewegung des Bekämpfungsmittels ist auch eine Schwenkbewegung denkbar. Es ist zum Beispiel denkbar, eine Quelle für elektromagnetische Strahlung während der Fahrt des Schienenfahrzeugs entgegen der Fahrtrichtung zu schwenken, so dass zum Beispiel ein Bereich des Gleisbetts unterhalb des Schienenfahrzeugs während der Schwenkdauer bestrahlt wird. Es ist denkbar, mehrere hin und her schwenkende Bekämpfungsmittel parallel einzusetzen, so dass immer mindestens ein Bekämpfungsmittel eine Schwenkbewegung entgegengesetzt zur Fahrtrichtung des Schienenfahrzeugs vornimmt. Denkbar ist auch eine Rotationsbewegung anstelle einer Schwenkbewegung.

Die Unkrautbekämpfung wird an einem oder mehreren Orten entlang der Strecke durchgeführt, für den/die eine Unkrautbekämpfung angezeigt worden ist.

Es wird also zunächst ein Ort bestimmt, an der eine Unkrautbekämpfung erfolgen soll und dann erfolgt die entsprechende Unkrautbekämpfung an diesem Ort. Anschließend kann ein weiterer Ort entlang der Strecke bestimmt werden, und es erfolgt eine entsprechende Unkrautbekämpfung an dem weiteren Ort.

In einer Ausführungsform der vorliegenden Erfindung erfolgt das Anzeigen eines Ortes durch ein Kamera-System, das mit Mitteln zur Bildanalyse ausgestattet ist. Das Kamera-System (oder Teile davon, wie beispielsweise die Kamera-Optik) ist an dem Schienenfahrzeug (ggf. beweglich) befestigt und nimmt während der Fahrt Bilder von der Gleisanlage auf. Die aufgenommenen Bilder werden auf die Anwesenheit von Pflanzen oder Pflanzenteilen analysiert. Wird in einem Bild eine Pflanze erkannt, so wird der Ort, an dem das Bild aufgenommen worden ist und an dem sich die Pflanze befindet, als ein Ort bestimmt, an dem eine Unkrautbekämpfung erfolgen soll.

Es ist denkbar, dass durch das Kamera-System Pflanzen als solche erkannt werden. Es ist aber auch denkbar, dass das Kamera-System so ausgeführt ist, dass es einzelne Pflanzenspezies identifizieren kann.

Zur Aufnahme eines Bildes von einem Objekt wird Licht, das auf das Objekt fällt und zurückgeworfen (reflektiert/gestreut) wird, von einem Bildsensor (z.B. CCD-Sensor, CMOS-Sensor) erfasst und in elektrische Signale umgewandelt. Im vorliegenden Fall werden Bilder der Umgebung eines Schienenfahrzeugs erzeugt, während sich das Schienenfahrzeug mit einer relativen Geschwindigkeit gegenüber der Umgebung bewegt. Um Bewegungsunschärfe zu vermeiden, muss die Belichtungszeit an die Geschwindigkeit angepasst werden. Je größer die Relativgeschwindigkeit ist, desto geringer ist die maximale Belichtungszeit, die nicht überschritten werden darf, um eine vorgegebene (tolerierbare) Bewegungsunschärfe einzuhalten.

Eine geringere Belichtungszeit kann beispielsweise durch eine höhere Lichtmenge kompensiert werden. In einer Ausführungsform der vorliegenden Erfindung wird eine höhere Geschwindigkeit des Schienenfahrzeugs durch eine Relativbewegung der Kamera entgegengesetzt zur Bewegungsrichtung des Schienenfahrzeugs kompensiert. Dazu kann die Kamera beispielsweise an einer Schiene am Schienenfahrzeug beweglich gelagert sein. Während das Schienenfahrzeug in die eine Richtung fährt, wird die Kamera zum Beispiel angetrieben durch einen Motor in die entgegengesetzte Richtung bewegt, um die Relativgeschwindigkeit zwischen Kamera und Umgebung des Schienenfahrzeugs (z.B. Gleisbett) zu reduzieren.

Es ist denkbar, dass die Kamera bei der Bewegung eine Wegstrecke entgegen der Bewegungsrichtung des Schienenfahrzeugs zurücklegt und bei dieser Bewegung mehrere Bildaufnahmen von der Umgebung (z.B. dem Gleisbett) erzeugt. Anschließend wird die Kamera wieder an ihren Ursprungsort zurückbewegt. Während dieser Zurückbewegung ist die Relativgeschwindigkeit zwischen der Kamera und der Umgebung des Schienenfahrzeugs natürlich größer als die Relativgeschwindigkeit zwischen Schienenfahrzeug und Umgebung. Während dieser Zurückbewegung werden daher vorzugsweise keine Bildaufnahmen von der Umgebung erzeugt. Damit das Schienenfahrzeug während dieser Zurückbewegung aber nicht "blind" ist, kann mindestens eine weitere Kamera eingesetzt werden, die sich mit der ersten Kamera bei der Erzeugung von Bildaufnahmen abwechselt.

Neben der lateralen Bewegung der Kamera(s) ist auch eine Schwenkbewegung denkbar. Denkbar ist zum Beispiel, dass für die Erkennung von Unkraut oder der vorliegenden Unkrautspezies mehrere Bilder von dem Objekt, das als Unkraut erkannt oder spezifiziert werden soll, aus unterschiedlichen Betrachtungswinkeln aufgenommen werden. Denkbar ist zum Beispiel, dass in einem ersten Bild, das von einer Kamera aus einem Blickwinkel aufgenommen worden ist, ein Objekt erkannt wird, das beispielsweise eine grüne Farbe aufweist. Bekanntermaßen weisen viele Pflanzen zumindest teilweise eine grüne Farbe auf, die auf das Vorhandensein von Chlorophyll zurückzuführen ist. Es ist denkbar, dass zur Sicherstellung, dass es sich bei dem grünen Objekt um eine Pflanze handelt oder zur Identifizierung der vorliegenden Pflanzenspezies die Kamera einen Schwenk entgegen der Fahrtrichtung des Schienenfahrzeugs vornimmt, um mindestens eine weitere Bildaufnahme von dem Objekt unter einem anderen Blickwinkel zu erzeugen. Es ist auch denkbar, dass aus einer Mehrzahl von Bildaufnahmen aus unterschiedlichen Blickwinkeln eine dreidimensionale Reproduktion des Objekts erzeugt wird. Je mehr Bildaufnahmen von einem Objekt aus unterschiedlichen Blickwinkeln erzeugt werden, desto höher ist üblicherweise die Genauigkeit bei der Identifizierung des Objekts.

In einer weiteren Ausführungsform der vorliegenden Erfindung wird der mindestens eine Ort, an dem eine Unkrautbekämpfung erfolgen soll, nicht während der Fahrt des Schienenfahrzeugs sondern vorab bestimmt, und während der Fahrt des Schienenfahrzeugs das Erreichen des vorab bestimmten Ortes (lediglich) angezeigt. Es ist zum Beispiel denkbar, dass Fernerkundungsdaten verwendet werden, um Orte entlang von Schienenstrecken zu identifizieren, an denen Unkraut wächst.

Fernerkundungsdaten sind digitale Informationen, die aus der Ferne beispielsweise durch Satelliten von der Erdoberfläche gewonnen werden. Auch der Einsatz von Luftfahrzeugen (unbemannt (Drohnen) oder bemannt) zur Aufnahme von Fernerkundungsdaten ist denkbar.

Es ist denkbar, dass Fernerkundungsdaten auf die Anwesenheit von Unkraut im Bereich des Streckennetzes eines Bahnbetreibers analysiert werden und die Geokoordinaten von Orten, an denen Unkräuter identifiziert worden sind, erfasst werden. Während sich das Schienenfahrzeug entlang einer Strecke bewegt, an der sich mindestens ein solcher Ort befindet, wird mittels eines Positionsbestimmungssystems (z.B. GPS-gestützt) die jeweilige Position des Schienenfahrzeugs überwacht. Nähert sich das Schienenfahrzeug einem solchen Ort, werden die notwendigen Vorkehrungen für eine Unkrautbekämpfung vorgenommen. Erkennt das Positionsbestimmungssystem, dass sich das Schienenfahrzeug an einem solchen Ort befindet, wird die Unkrautbekämpfungsmaßnahme ausgeführt.

Es ist aber auch denkbar, dass eine digitale Karte vorliegt, auf der Orte verzeichnet sind, an denen bestimmte Maßnahmen zur Unkrautbekämpfung nicht durchgeführt werden sollen.

Es ist zum Beispiel denkbar, dass in einigen Bereichen entlang einer Strecke aus Umwelt- oder Gewässerschutzgründen keine Ausbringung von Herbiziden erfolgen darf.

Ebenso ist es denkbar, dass an einigen Orten keine elektrische Energie verwendet werden darf, um Pflanzen abzutöten, zum Beispiel weil sich in der Nähe empfindliche elektrische oder elektronische Anlagen befinden, die durch die Anwendung von elektrischer Energie gestört oder geschädigt werden können.

Dementsprechend werden also diejenigen Orte angezeigt, an denen eine Unkrautbekämpfungsmaßnahme unterbrochen werden soll, während die Maßnahme an allen anderen Orten vorgenommen wird.

## Patentansprüche

1. Vorrichtung zur Unkrautbekämpfung für ein Schienenfahrzeug, umfassend
- Anzeigemittel zum Anzeigen eines oder mehrerer Orte entlang einer Strecke, an dem/den Maßnahmen zur Unkrautbekämpfung durchgeführt werden sollen, und
- Bekämpfungsmittel zur Unkrautbekämpfung an dem angezeigten Ort / den angezeigten Orten
**dadurch gekennzeichnet, dass** die Anzeigemittel und/oder die Bekämpfungsmittel so hergerichtet sind, dass sie während der Fahrt des Schienenfahrzeugs eine Bewegung ausführen, die der Bewegungsrichtung des fahrenden Schienenfahrzeugs entgegengerichtet ist.

2. Vorrichtung gemäß Anspruch 1, wobei es sich bei den beweglich ausgeführten Bekämpfungsmitteln um Düsen handelt.

3. Vorrichtung gemäß Anspruch 1, wobei es sich bei den beweglich ausgeführten Bekämpfungsmitteln um Sprühdüsen zum Ausbringen eines oder mehrerer Herbizide handelt.

4. Vorrichtung gemäß Anspruch 1, wobei es sich bei den beweglich ausgeführten Bekämpfungsmitteln um Elektroden handelt, durch die bei Kontakt mit einer Pflanze ein elektrischer Strom zum Fließen gebracht werden kann, der zumindest teilweise durch Teile der Pflanze fließt.

5. Vorrichtung gemäß Anspruch 1, wobei es sich bei den beweglich ausgeführten Bekämpfungsmitteln um Mittel zum Aussenden von Strahlung in Richtung von Pflanzen, die sich auf der Gleisanlage befinden, handelt.

6. Vorrichtung gemäß einem der Ansprüche 1 bis 5, wobei es sich bei den beweglich ausgeführten Anzeigemitteln um eine oder mehrere Kameras handelt, die mit einem Computersystem zur Analyse der Bilder verbunden ist/sind.

7. Verfahren umfassend die Schritte
- Bewegen eines Schienenfahrzeuges entlang einer Strecke in eine Bewegungsrichtung,
- Anzeigen mindestens eines Ortes, an dem eine Maßnahme zur Unkrautbekämpfung durchgeführt werden soll,
- Durchführung der Maßnahme zur Unkrautbekämpfung an dem mindestens einen Ort,
**dadurch gekennzeichnet, dass** Anzeigemittel zum Anzeigen des mindestens einen Ortes und/oder Bekämpfungsmittel zur Durchführung der Maßnahme zur Unkrautbekämpfung an dem mindestens einen Ort während des Bewegens des Schienenfahrzeugs eine Bewegung ausführen, die der Bewegungsrichtung des Schienenfahrzeugs entgegengesetzt ist, um die Relativgeschwindigkeit zwischen Anzeigemittel(n) und/oder Bewegungsmittel(n) und dem mindestens einen Ort zu reduzieren.

8. Verfahren gemäß Anspruch, wobei sich das Schienenfahrzeug mit einer Geschwindigkeit von mindestens 30 km/h, vorzugsweise mindestens 40 km/h, noch mehr bevorzugt mindestens 50 km/h bewegt, während die Maßnahme zur Unkrautbekämpfung ausgeführt werden.

9. Verfahren gemäß einem der Ansprüche 7 bis 8, **dadurch gekennzeichnet, dass** die beweglich ausgeführten Anzeigemittel und/oder Bewegungsmittel an einer Schiene gelagert sind und eine laterale Bewegung entgegengesetzt zur Bewegungsrichtung des Schienenfahrzeugs durchführen.

10. Verfahren gemäß Anspruch 9, **dadurch gekennzeichnet, dass** die Schiene in sich zurückführt.

11. Verfahren gemäß einem der Ansprüche 7 bis 10, **dadurch gekennzeichnet, dass** die beweglich ausgeführten Anzeigemittel und/oder Bewegungsmittel an einem umlaufenden Träger befestigt sind und eine laterale Bewegung entgegengesetzt zur Bewegungsrichtung des Schienenfahrzeugs durchführen.

12. Verfahren gemäß einem der Ansprüche 7 bis 11, **dadurch gekennzeichnet, dass** die beweglich ausgeführten Anzeigemittel und/oder Bewegungsmittel schwenkbar gelagert sind und eine Schwenkbewegung entgegengesetzt zur Bewegungsrichtung des Schienenfahrzeugs durchführen.

13. Verfahren gemäß einem der Ansprüche 7 bis 12, **dadurch gekennzeichnet, dass** die beweglich ausgeführten Anzeigemittel und/oder Bewegungsmittel eine Rotationsbewegung durchführen, bei denen sich diejenigen Teile der Anzeigemittel und/oder Bewegungsmittel, die dem Gleisbett am nächsten liegen, eine Bewegung entgegengesetzt zur Bewegungsrichtung des Schienenfahrzeugs durchführen.

14. Verfahren gemäß einem der Ansprüche 7 bis 13, **dadurch gekennzeichnet, dass** mehrere Anzeigemittel und/oder Bewegungsmittel vorhanden sind, deren Bewegungen so aufeinander abgestimmt sind, dass immer mindestens ein Anzeigemittel und/oder Bewegungsmittel vorhanden ist, dass eine Bewegung entgegengesetzt zur Bewegungsrichtung des Schienenfahrzeugs durchführt.
